# EUROPÄISCHE PATENTSCHRIFT

(11) **EP 2 369 211 B1**
(45) Veröffentlichungstag und Bekanntmachung des Hinweises auf die Patenterteilung: **02.12.2020**
(21) Anmeldenummer: 11001931.2
(22) Anmeldetag: 09.03.2011
(51) Int. Cl.: F16L 5/08, F16L 19/06, H02G 3/06, H02G 15/04, F16L 5/06

(54) **Vorrichtung für eine abgedichtete Durchführung von Langformteilen**
Device for a sealed feedthrough of long moulded parts
Dispositif pour le passage étanche de pièces longilignes

(30) Priorität: 10.03.2010 DE 102010010864
(43) Veröffentlichungstag der Anmeldung: 28.09.2011
(73) Patentinhaber: Pflitsch GmbH & Co. KG., 42499 Hückeswagen (DE)
(72) Erfinder: Binder, Karlheinz, 42499 Hückeswagen (DE)
(74) Vertreter: Geskes, Christoph

(56) Entgegenhaltungen:
- EP-A1- 0 579 125
- EP-A1- 1 312 847
- DE-A1- 10 312 749
- DE-A1-102005 051 226
- DE-U1-202009 004 735
- FR-A1- 2 752 899
- US-B1- 6 350 955
- US-B1- 6 488 317

## Beschreibung

Die Erfindung betrifft eine Vorrichtung für eine abgedichtete Durchführung von Langformteilen, insbesondere Leitungen und/oder Rohren und/oder Stäben, bestehend aus einem Formteil mit einem Durchführungskanal und einer auf ein Ende des Formteiles aufsteckbaren und lösbar mit dem Formteil verbindbaren Kappe mit zum Durchführungskanal mindestens etwa koaxial ausgerichteter Durchgangsöffnung.

Herkömmliche Vorrichtungen dieser Art sind beispielsweise in der DE 103 12 749 A1 beschrieben. Die bekannte Vorrichtung besteht aus einem Formteil in Form eines Doppelnippels mit einem Durchführungskanal für ein Langformteil, beispielsweise ein Kabel. Ferner weist dieses Formteil eine Kappe in Form einer gelochten Druckschraube auf. Diese Kappe kann gemäß Stand der Technik auf das entsprechende Ende des Formteiles aufgesetzt und aufgeschraubt werden, so dass eine Verbindung zwischen den Teilen hergestellt ist.

Um hierbei eine Zugentlastung und Abdichtung des durchgeführten Langformteiles zu erreichen, ist zusätzlich ein Dichteinsatz und ein Klemmring vorgesehen. Beim Aufschrauben der Kappe auf das Formteil wird der Klemmring durch Einwirken der Kappe nach radial innen verformt, so dass eine Zugentlastung und infolge des Dichteinsatzes auch eine gute Abdichtung des durchgeführten Langformteiles, insbesondere der durchgeführten Leitung, erfolgt. Es ist auch bekannt, den Klemmring und den Dichteinsatz einteilig aus elastischem Material zu formen. Bei allen bekannten Vorrichtungen dieser Art ist es erforderlich, zusätzlich zum Formteil und der Kappe ein zusätzliches Element in Form eines Klemmringes und/oder eines Dichteinsatzes einzubringen. Um entsprechende Drehmomente auf die Kappe aufbringen zu können, damit eine abgedichtete Leitungsdurchführung ermöglicht ist, weist die Kappe üblicherweise Schlüsselflächen für den Ansatz eines Schraubenschlüssels auf, wobei auch der Doppelnippel einen entsprechenden Ansatz mit Schlüsselflächen aufweist, um einen Gegenhalt beim Verschrauben der Teile zu bilden. Das Verschrauben erfolgt dann mittels manueller Kraft, die über Schraubenschlüssel auf die Vorrichtung übertragen wird.

Aus der US 6 350 955 B1 ist ein Doppelnippel mit sich axial erstreckenden, voneinander getrennten Armen als Klemmmitteln vorgesehen. Hierdurch wird zwar eine Klemmung erreicht. Eine Abdichtung kann aber hierbei nicht erreicht werden, da die Klemmarme nicht als Dichtmittel geeignet sind, weil zwischen den Klemmarmen eine Abdichtung nicht möglich ist.

Aus der EP 1 312 847 A1 ist ein Doppelmittel mit einer Anordnung von separierten Haltearmen vorgesehen. Des Weiteren ist ein Dichteinsatz vorgesehen. Dies entspricht dem eingangs beschriebenen Stand der Technik.

Eine ähnliche Lösung zeigt das Gebrauchsmuster DE 20 2009 004 735 U1. Dort ist zusätzlich ein Zugentlastungsklemmkäfig vorgesehen, der die Dichtung und Klemmwirkung erreichen soll.

Nichts anderes zeigt die FR 2 752 899 A1 und die US 6 488 317 B1 sowie die EP 0 579 125 A1.

Aus der DE 10 2005 051 226 A1 ist eine Kabel- oder Schlauchverschraubung bekannt, die einen Stutzen, ein damit verschraubbares Druckelement und ein Dichtungselement, mit einem Dichtungsträger und einer Dichtung aufweist.

Ausgehend von diesem Stand der Technik liegt der Erfindung die Aufgabe zugrunde, eine Vorrichtung gattungsgemäßer Art zu schaffen, bei der ohne zusätzliche Klemmteile oder Dichtteile eine abgedichtete Durchführung von Langformteilen ermöglicht ist und auch eine Zugentlastung des durchgeführten Teiles erreicht wird.

Zur Lösung dieser Aufgabe wird vorgeschlagen, dass das Formteil aus einem plastisch verformbaren Werkstoff, insbesondere Kunststoff, besteht und dass das Ende des Formteiles, auf das die Kappe aufbringbar ist, mittels der aufgebrachten Kappe derart plastisch verformbar oder verformt ist, dass es mit dem durchgeführten Langformteil eine Abdichtung und Zugentlastung bildet, wobei das Formteil an seinem von der Kappe übergriffenen Ende einen nach innen zur Mittelachse des Durchführungskanals gerichteten Kragen aufweist, wobei der Kragen umlaufend ausgebildet ist.

Gemäß der Erfindung soll das Formteil aus einem plastisch verformbarem Werkstoff bestehen, wobei die plastische Verformbarkeit es ermöglichen soll, dass allein durch das Aufbringen der Kappe die entsprechende plastische Verformbarkeit erfolgt, so dass das Ende des Formteiles, auf welches die Kappe aufgebracht wird, gegen das durchgeführte Langformteil radial verformt und angedrückt wird, so dass das durchgeführte Langformteil abgedichtet und zugentlastet in der Vorrichtung gehalten ist. Die plastische Verformbarkeit soll so gestaltet sein, dass es im einfachsten Falle möglich ist, allein durch das Aufbringen der Kappe mittels Handkraft die entsprechende Verformung durchzuführen. Auch eine solche plastische Verformbarkeit ist durch die Erfindung betroffen und gemeint, bei der die Kappe beispielsweise mittels eines Werkzeuges, welches handbetätigt ist, auf das Ende des Formteiles aufgebracht und mittels des manuell betätigten Werkzeuges die Verformbarkeit des Endes des Formteiles durch die Kappe erreicht wird. Im Ergebnis soll mittels der Kappe das Ende des Formteiles im Wesentlichen plastisch verformt werden, so dass es vor allem dann, wenn das Langformteil ein Kabel ist, zusammen mit dem Kabelmantel eine gute Abdichtung und Zugentlastung bildet.

Durch eine solche Ausgestaltung werden die bisher notwendigen Klemmteile und Dichtelemente überflüssig, so dass deren Anordnung für die entsprechende abgedichtete Durchführung von Langformteilen nicht mehr erforderlich ist. Die Vorrichtung ist damit äußerst kostengünstig zur Verfügung zu stellen.

In einfachster Form könnte beispielsweise das Formteil aus Metall bestehen, wobei das verformbare Ende des Formteiles hinsichtlich der Wandstärke derart ausgestaltet ist, dass durch das Aufbringen der Kappe eine entsprechende plastische Verformbarkeit nach radial innen erfolgen kann.

Da das Formteil einerseits zur Befestigung der Kappe dient, muss das Formteil in dem Bereich, in dem es mit der Kappe verbunden wird, eine solche Materialgestaltung, insbesondere Materialdicke aufweisen, dass es die entsprechenden Kräfte aufnehmen kann, ohne dass eine Verformung stattfindet. Lediglich in dem Endbereich des Formteiles, welches mit der Kappe zum Zwecke der plastischen Verformung gegen das durchgeführte Langformteil dient, ist eine geringere Wandstärke hilfreich, um eine entsprechende plastische Verformung bei der Montage zu ermöglichen. Eine genaue Angabe der Wandstärke ist nicht erforderlich und auch nicht sinnvoll, da dies von der Materialwahl und von anderen Parametern abhängt, die der Benutzer durch wenige Versuche ermitteln kann.

Bevorzugt ist allerdings vorgesehen, dass das Formteil aus thermoplastischem Polymer-Material besteht.

Insbesondere ist bevorzugt vorgesehen, dass das Formteil aus Polycarbonat besteht.

Der Einsatz solcher Materialien ermöglicht eine kostengünstige Fertigung, wobei durch entsprechende Dimensionierung die gewünschte plastische Verformbarkeit erreicht werden kann Des Weiteren ist bevorzugt vorgesehen, dass das Formteil an seinem von der Kappe übergriffenen Ende einen nach innen zur Mittelachse des Durchführungskanals gerichteten Kragen aufweist.

Durch den nach innen gerichteten Kragen, der im Extremfall radial nach innen gerichtet sein kann, aber auch schräg nach innen gerichtet sein kann, wird die Angriffsfläche des Endes des Formteiles an dem Mantel des durchgeführten Langformteiles auf einen relativ kleinen Bereich beschränkt, der durch den Kragen gebildet ist, so dass durch die plastische Verformung erhebliche Kräfte auf das durchgeführte Formteil im Bereich des vorragenden Kragens aufgebracht werden können. Erfindungsgemäß ist der Kragen umlaufend ausgebildet, um eine ausreichende Abdichtung und auch eine hohe Zugentlastung bezüglich des durchgeführten Langformteiles zu erreichen.

Die lösbare Verbindung der Kappe an dem Ende des Formteiles kann beispielsweise durch stufenweise Verrastung erfolgen, so dass die Kappe zu Beginn des Montagezustandes nur geringfügig auf das Ende des Formteiles aufgesteckt wird und nach Durchführen des Langformteiles die Kappe unter Kraftaufwendung weiter auf das Formteil aufgeschoben wird, wobei mit zunehmenden Einschubvorgang weitere Rasten zwischen Formteil und Kappe wirksam werden, um die jeweilige Position zu sichern. Solche Rasten können beispielsweise sägezahnartig ausgebildet sein, so dass das Aufschieben oder Aufdrücken der Kappe erleichtert ist, ein Lösen der Kappe entgegen der Aufsteckrichtung aber verhindert ist. Auch andere Möglichkeiten der Anordnung und Befestigung sind denkbar, beispielsweise in Form von bajonettartigen Verschlüssen oder dergleichen.

Um eine einfache Manipulation und einen relativ einfachen Zusammenbau der Teile zu erreichen, kann vorgesehen sein, dass das Formteil mit Abstand von seinem von der Kappe übergriffenen Ende beginnend über einen Teil seiner Länge Außengewinde aufweist und die Kappe einen zylindrischen Mantelbereich mit dazu passendem Innengewinde aufweist.

Die Kappe kann damit in einfacher Weise auf das Ende des Formteiles aufgesetzt und aufgeschraubt werden, wobei während des Schraubvorganges die plastische Verformung des Endteiles des Formteiles nach radial innen erfolgt.

Um die gewünschte plastische Verformung sicher zu stellen, kann vorgesehen sein, dass die Kappe zwischen Durchgangsöffnung und einem zylindrischen Mantelbereich Verformungskonturen aufweist, die in Montagesolllage am Ende oder Endbereich des Formteils anliegen.

Dabei kann vorgesehen sein, dass die Verformungskonturen bogenartig, halbkugelartig oder konisch den umgebenden Freiraum vom Aufsteckbereich zur Durchgangsöffnung der Kappe hin zunehmend verengend geformt sind.

Um die Dichtwirkung noch zu verbessern, kann vorgesehen sein, dass an der Randkante des von der Kappe übergriffenen Endes des Formteiles ein Kragen aus elastomerem Werkstoff angeformt oder angebracht ist.

Sofern das Formteil aus Kunststoff besteht, ist es in einfacher Weise möglich, den elastomeren Werkstoff aufzuformen. Falls die Kappe aus anderem Material besteht, kann der Kragen aus elastomerem Werkstoff in anderer Weise am Formteil fixiert werden, beispielsweise durch Klebung.

Um hohe Kräfte übertragen zu können, ist vorzugsweise vorgesehen, dass die Kappe aus Metall besteht.

Um eine besonders einfache Betätigung bei der Befestigung der Kappe an dem Formteil zu ermöglichen, ist vorgesehen, dass die Kappe umlaufend polygonartige Schlüsselflächen zum Ansatz eines Schraubenschlüssels aufweist.

Hierdurch ist es möglich, die Kappe, wenn sie beispielsweise gewindemäßig mit dem Formteil verbunden wird, mittels eines Schraubenschlüssels zu drehen.

Die erfindungsgemäße Vorrichtung wird normalerweise dazu verwendet, Kabel oder dergleichen in Installationskästen einzuführen oder durch Wandungen durchzuführen. Hierzu weist das Formteil an seinem der Kappe entgegengerichteten Ende eine entsprechende Ausgestaltung auf, die es ermöglicht, dieses Ende durch eine Lochung einer Wandung oder dergleichen durchzustecken oder in die Lochung einer Wandung einzuschrauben, wobei entsprechende Rastmittel und/oder gewindemäßige Verbindungen zur Lagesicherung im Stand der Technik vielfach bekannt sind.

Vorzugsweise ist dabei vorgesehen, dass das Formteil als Doppelnippel ausgebildet ist, dessen erstes Ende die Kappe trägt und dessen zweites Ende durch eine Öffnung oder Lochung einer Wandung eines Bauteiles montierbar ist.

Eine solche Ausbildung ist an sich im Stand der Technik bekannt.

Bevorzugt ist dabei vorgesehen, dass zwischen erstem und zweitem Ende ein Stützkragen ausgebildet ist.

Eine solche Ausbildung ist ebenfalls an sich im Stand der Technik bekannt. Der Stützkragen weist vorzugsweise ebenfalls Schlüsselflächen auf, ist also polygonal ausgebildet, damit mittels eines Schraubenschlüssels ein Gegenhalt beim Aufschrauben der Kappe gebildet wird.

Bevorzugt ist zudem vorgesehen, dass auf dem zweiten Ende nahe des Stützkragens eine Lippe angeformt ist, die mittels eines auf das zweite Ende montierten Bauteiles, insbesondere eines auf ein Außengewinde des zweiten Endes aufgeschraubten Bauteiles plastisch verformbar ist.

Sofern das zweite Ende durch eine Lochung einer Gehäusewandung gesteckt und eine Gegenmutter auf das überstehende Ende aufgesetzt wird, so wird durch die Gegenmutter die Lippe plastisch verformt, so dass sie eine gute Abdichtung im Bereich der Lochung ermöglicht. Auch dann, wenn das zweite, mit Gewinde versehene Ende in ein mit entsprechendem Innengewinde ausgebildetes Bauteil eingeschraubt wird, wird beim Schraubvorgang die Lippe durch das weitere Bauteil plastisch verformt und gegen die entsprechende Wandung oder dergleichen angepresst, die von dem zweiten Ende des Formteiles durchgriffen ist, so dass eine vorzügliche Abdichtung ohne zusätzliche Dichtungen ermöglicht ist.

Ein Ausführungsbeispiel der Erfindung ist in der Zeichnung dargestellt und im Folgenden näher beschrieben.

Es zeigt:
- Figur 1: eine erfindungsgemäße Vorrichtung in Ansicht;
- Figur 2: desgleichen im Mittellängsschnitt gesehen;
- Figur 3: die Vorrichtung im Mittellängsschnitt gesehen mit durchgeführtem Langformteil in einer ersten Montagestellung;
- Figur 4: desgleichen in einer zweiten Montagestellung;
- Figur 5: die Vorrichtung mit durchgeführtem Langformteil gemäß Figur 4 in Ansicht gesehen.

In der Zeichnung ist eine Vorrichtung für eine abgedichtete Durchführung eines Langformteiles 1 gezeigt. Das Langformteil ist im Ausführungsbeispiel ein mehradriges Kabel, welches einen elastischen Mantel aus Isoliermaterial aufweist.

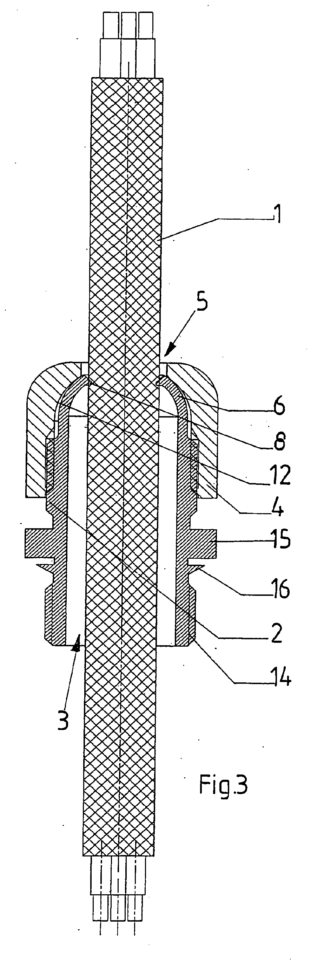

Die Vorrichtung besteht aus einem Formteil 2, welches einen Durchführungskanal 3 aufweist, sowie einer auf ein Ende des Formteiles 2 aufbringbaren und lösbar mit dem Formteil 2 verbindbaren Kappe 4 mit zum Durchführungskanal koaxial ausgerichteter Durchgangsöffnung 5. In einer Montagesolllage, wie sie beispielsweise in Figur 3 veranschaulicht ist, kann das Langformteil somit durch das Formteil geführt werden und die Kappe 4 durchgreifen.

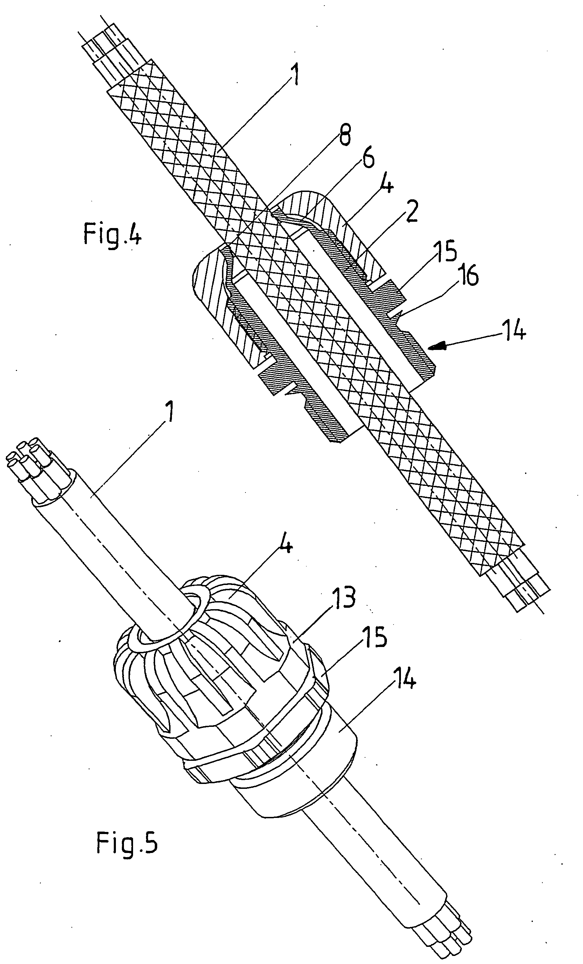

Um nun eine wirksame Abdichtung und Zugentlastung zu erreichen, besteht das Formteil 2 aus einem plastisch verformbaren Werkstoff, vorzugsweise Kunststoff. Das Ende 6 des Formteiles 2, auf das die Kappe 4 aufbringbar ist, ist mittels der aufgebrachten Kappe 4 derart plastisch verformbar und im Endzustand plastisch verformt, wie beispielsweise in Figur 3 und 4 verdeutlich ist, dass es mit dem durchgeführten Langformteil 1 eine Abdichtung und Zugentlastung bildet.

Vorzugsweise besteht das Formteil 2 aus einem thermoplastischen Polymermaterial, insbesondere aus Polycarbonat.

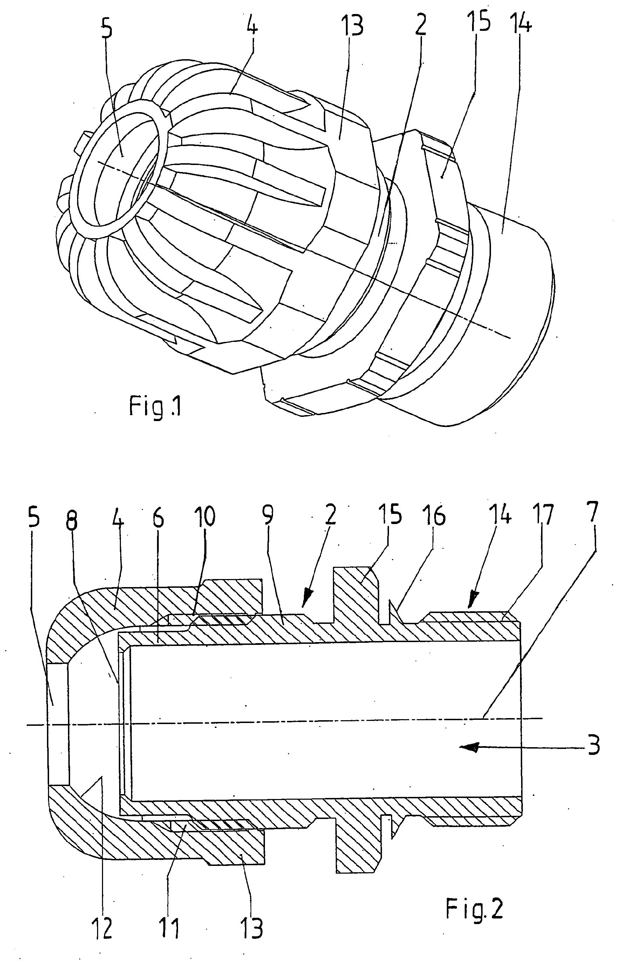

Mit dem Begriff der plastischen Verformbarkeit ist gemeint, dass das Ende 6 des Formteiles 2 durch Einwirken der Kappe 4 aus einer Ausgangslage, wie sie in Figur 1 verdeutlicht ist, über eine Zwischenstellung, wie sie in Figur 3 verdeutlicht ist, in eine Endstellung, wie sie in Figur 4 verdeutlicht ist, verformbar ist und zwar durch Einwirkung auf die Kappe 4 mittels eines geeigneten Werkzeuges oder mit Handkraft.

Vorzugsweise weist das Formteil 2 an seinem mit der Kappe 4 plastisch verformbaren Ende 6 eine gegenüber seinem weiteren Verlauf dünnere Wandung auf, um die plastische Verformung beim Aufbringen der Kappe 4 zu erleichtern und/oder zu ermöglichen. Zudem weist das Formteil 2 an seinem von der Kappe 4 übergriffenen Ende 6 einen nach radial zur Mittelachse 7 des Durchführungskanals 3 gerichteten Kragen 8 auf. Dieser Kragen bildet ein vorzügliches Widerlager, welches sich beim Verformen des Endbereiches 6 durch das Aufbringen der Kappe 4 radial gegen den Mantel des durchgeführten Langformteiles 1 stützt und, falls dieser, wie das bei Kabeln üblich ist, elastisch ist, in diesen Mantel eindrückt, wie dies in Figur 3 veranschaulicht ist. Bei nachfolgender Axialbewegung der Kappe 4 relativ zum Formteil 2 wird der Bereich 6 mit dem Kragen 8 zunehmend umgeformt, bis er die Endform beispielsweise wie in Figur 4 dargestellt, einnimmt.

Um mit einfachen Mitteln die Kappe 4 an dem Formteil 2 in bestimmter Weise befestigen zu können, weist das Formteil 2 mit Abstand von seinem von der Kappe 4 übergriffenen Ende 6 beginnend über einen Teil seiner Länge Außengewinde 9 auf, während die Kappe 4 einen zylindrischen Mantelbereich 10 mit dazu passendem Innengewinde 11 aufweist, so dass sie auf das Außengewinde aufschraubbar ist.

Um die gewünschte plastische Verformung des Endbereichs 6 zu ermöglichen, weist die Kappe 4 in dem Bereich zwischen ihrer Durchgangsöffnung 5 und einem zylindrischen Mantelbereich 10 Verformungskonturen 12 auf, die in Montagesolllage, wie aus der Figur 3 und Figur 4 veranschaulicht ist, am Ende oder Endbereich des Formteiles anliegen und den Endbereich 6 des Formteiles nach radial innen zwängen und dabei plastisch umformen. Im Ausführungsbeispiel sind diese Verformungskonturen 12 bogenartig als etwa halbschalen- oder halbkugelartige Innenfläche ausgebildet, wobei die lichte Weite der Kappe 4 vom Gewindebereich 11 beginnend zur Durchgangsöffnung 5 sich stetig verkleinert.

Zusätzlich kann an der Randkante des von der Kappe 4 übergriffenen Endes 6 des Formteiles 2 ein Kragen aus elastomerem Werkstoff aufgeformt oder angebracht sein.

Die Kappe 4 kann auch aus Metall bestehen. In an sich bekannter Weise weist die Kappe 4 umlaufend Schlüsselflächen 13 in Form eines umlaufenden Polygons auf, die zum Ansatz eines Schraubenschlüssels dienen.

Des Weiteren ist im Ausführungsbeispiel das Formteil 2 als Doppelnippel ausgebildet, dessen erstes Ende die Kappe 4 trägt und dessen zweites Ende 14 durch eine Öffnung oder Lochung einer Wandung eines Bauteiles montierbar ist. Zusätzlich ist zwischen dem ersten und zweiten Ende ein Stützkragen 15 ausgebildet, der ebenfalls nach Art eines Polygons ausgebildet ist und somit Schlüsselflächen zum Angriff eines Schraubenschlüssels bildet, wie besonders gut in Figur 1 und Figur 5 ersichtlich ist.

Nahe des Stützkragens 15 ist eine umlaufende Lippe 16 am zweiten Ende 14 des Formteiles 2 angeformt. Sofern die Vorrichtung mit dem zweiten Ende 14 voraus durch eine Lochung einer Wandung oder dergleichen gesteckt wird, so liegt die Lippe 16 an der entsprechenden Wandfläche an. Wird nun auf das mit Außengewinde 17 versehene zweite Ende des Formteiles 2 eine Mutter oder dergleichen gegengeschraubt, so wird die Lippe 16 zunehmend gegen die Wandung angezogen und dabei plastisch verformt, so dass sie eine vorzügliche Abdichtung im Bereich des Durchgriffes durch die Lochung bewirkt.

Durch die Erfindung wird eine Vorrichtung gattungsgemäßer Art zur Verfügung gestellt, die lediglich aus zwei Teilen besteht, nämlich dem Formteil 2 und der Kappe 4, wobei allein durch das Zusammenwirken dieser beiden Teile eine Zugentlastung und Abdichtung eines durchgeführten Langformteiles erreicht wird.

## Patentansprüche

1. Vorrichtung mit einem abgedichtet durchgeführten Langformteil (1), insbesondere Leitungen und/oder Rohren und/oder Stäben, bestehend aus einem Formteil (2) mit einem Durchführungskanal (3), der von dem Langformteil (1) durchgriffen ist und einer auf ein Ende des Formteiles (2) aufsteckbaren und lösbar mit dem Formteil verbindbaren Kappe (4) mit zum Durchführungskanal (3) mindestens etwa koaxial ausgerichteter Durchgangsöffnung (5), wobei das Formteil (2) aus einem plastisch verformbaren Werkstoff, insbesondere Kunststoff, besteht und das Ende (6) des Formteiles (2), auf das die Kappe (4) aufbringbar ist, mittels der aufgebrachten Kappe (4) derart plastisch verformbar oder verformt ist, dass es mit dem durchgeführten Langformteil (1) eine Abdichtung und Zugentlastung bildet, wobei das Formteil (2) an seinem von der Kappe (4) übergriffenen Ende (6) einen nach innen zur Mittelachse (7) des Durchführungskanals (3) gerichteten Kragen (8) aufweist, und wobei der Kragen (8) umlaufend ausgebildet ist.

2. Vorrichtung nach Anspruch 1,
**dadurch gekennzeichnet, dass** das Formteil (2) aus thermoplastischem Polymer-Material besteht.

3. Vorrichtung nach Anspruch 1 oder 2,
**dadurch gekennzeichnet, dass** das Formteil (2) aus Polycarbonat besteht.

4. Vorrichtung nach einem der Ansprüche 1 bis 3, **dadurch gekennzeichnet, dass** das Formteil (2) an seinem mittels der Kappe (4) plastisch verformbaren Ende (6) eine gegenüber seinem weiteren Verlauf dünnere Wandung aufweist.

5. Vorrichtung nach einem der Ansprüche 1 bis **4,dadurch gekennzeichnet, dass** das Formteil (2) mit Abstand von seinem von der Kappe (4) übergriffenen Ende (6) beginnend über einen Teil seiner Länge Außengewinde (9) aufweist und die Kappe (4) einen zylindrischen Mantelbereich (10) mit dazu passendem Innengewinde (11) aufweist.

6. Vorrichtung nach einem der Ansprüche 1 bis 5, **dadurch gekennzeichnet, dass** die Kappe (4) zwischen Durchgangsöffnung (5) und einem zylindrischen Mantelbereich (10) Verformungskonturen (12) aufweist, die in Montagesolllage am Ende (6) oder Endbereich des Formteils (2) anliegen.

7. Vorrichtung nach Anspruch 6, **dadurch gekennzeichnet, dass** die Verformungskonturen (12) bogenartig, halbkugelartig oder konisch den umgebenden Freiraum vom Aufsteckbereich zur Durchgangsöffnung (5) der Kappe (4) hin zunehmend verengend geformt sind.

8. Vorrichtung nach einem der Ansprüche 1 bis 7, **dadurch gekennzeichnet, dass** an der Randkante des von der Kappe (4) übergriffenen Endes (6) des Formteiles (2) ein Kragen aus elastomerem Werkstoff angeformt oder angebracht ist.

9. Vorrichtung nach einem der Ansprüche 1 bis 8, **dadurch gekennzeichnet, dass** die Kappe (4) aus Metall besteht.

10. Vorrichtung nach einem der Ansprüche 1 bis 9, **dadurch gekennzeichnet, dass** die Kappe (4) umlaufend polygonartige Schlüsselflächen (13) zum Ansatz eines Schraubenschlüssels aufweist.

11. Vorrichtung nach einem der Ansprüche 1 bis 10, **dadurch gekennzeichnet, dass** das Formteil (2) als Doppelnippel ausgebildet ist, dessen erstes Ende die Kappe (4) trägt und dessen zweites Ende (14) durch eine Öffnung oder Lochung einer Wandung eines Bauteiles montierbar ist.

12. Vorrichtung nach Anspruch 11,
**dadurch gekennzeichnet, dass** zwischen erstem und zweitem Ende (14) ein Stützkragen (15) ausgebildet ist.

13. Vorrichtung nach Anspruch 12,
**dadurch gekennzeichnet, dass** auf dem zweiten Ende (14) nahe des Stützkragens (15) eine Lippe (16) angeformt ist, die mittels eines auf das zweite Ende (14) montierten Bauteiles, insbesondere eines auf ein Außengewinde des zweiten Endes aufgeschraubten Bauteiles plastisch verformbar ist.

## Claims

1. Device with a long moulded part (1) which is passed through in a sealed manner, in particular lines and/or pipes and/or rods, consisting of a moulded part (2) with a feed-through channel (3) through which the long moulded part (1) passes, and a cap (4) which can be placed on one end of the moulded part (2) and which is releasably connected to the moulded part and has a through-hole (5) aligned at least approximately coaxially with the feed-through channel (3),wherein the moulded part (2) consists of a plastically deformable material, in particular plastic, and the end (6) of the moulded part (2) to which the cap (4) can be applied is plastically deformable or deformed by means of the applied cap (4) in such a way that it forms a seal and strain relief with the long moulded part (1) which is fed through, wherein the moulded part (2) has, at its end (6) overlapped by the cap (4), a collar (8) directed inwardly towards the center axis (7) of the feed-through channel (3), and wherein the collar (8) is formed circumferentially.

2. Device according to claim **1,characterized in that** the moulded part (2) is made of thermoplastic polymer material.

3. Device according to claim 1 or 2, **characterized in that** the moulded part (2) is made of polycarbonate.

4. Device according to one of claims 1 to 3, **characterized in that** the moulded part (2) has at its end (6), which is plastically deformable by means of the cap (4), a wall which is thinner than its further course.

5. Device according to one of claims 1 to 4, **characterized in that** the moulded part (2) has external threads (9) over part of its length starting at a distance from its end (6) overlapped by the cap (4) and the cap (4) has a cylindrical casing region (10) with a matching internal thread (11).

6. Device according to one of claims 1 to 5, **characterized in that** the cap (4) has deformation contours (12) between the through-hole (5) and a cylindrical casing region (10), said deformation contours (12) abutting the end (6) or end region of the moulded part (2) in the desired assembly position.

7. Device according to claim 6, **characterized in that** the deformation contours (12) are shaped in an arcuate, hemispherical or conical manner, progressively narrowing the surrounding free space from the push-on area towards the through-hole (5) of the cap (4).

8. Device according to one of claims 1 to 7, **characterized in that** a collar of elastomeric material is formed on or attached to the marginal edge of the end (6) of the moulded part (2) over which the cap (4) engages.

9. Device according to one of claims 1 to 8, **characterized in that** the cap (4) is made of metal.

10. Device according to one of claims 1 to 9, **characterized in that** the cap (4) has circumferential polygon-like wrench surfaces (13) for the attachment of a wrench.

11. Device according to one of claims 1 to 10, **characterized in that** the moulded part (2) is designed as a double nipple, the first end of which carries the cap (4) and the second end (14) of which can be mounted through an opening or perforation in a wall of a component.

12. Device according to claim 11, **characterized in that** a support collar (15) is formed between the first and second end (14).

13. Device according to claim 12, **characterized in that** a lip (16) is formed on the second end (14) near the support collar (15), which lip (16) is plastically deformable by means of a component mounted on the second end (14), in particular a component screwed onto an external thread of the second end.

## Revendications

1. Dispositif avec une pièce moulée longiligne (1), traversée de manière étanche, en particulier des câbles et/ou des tuyaux et/ou des tiges, constituée d'une pièce moulée (2) avec un conduit de passage (3) traversé par ladite pièce moulée longiligne (1) et d'un capuchon (4) plaçable à une extrémité de ladite pièce moulée (2) et reliable de manière amovible à ladite pièce moulée avec une ouverture de passage (5) orientée au moins approximativement coaxialement audit conduit de passage (3), ladite pièce moulée (2) est composée d'un matériau plastiquement déformable, en particulier de plastique, et l'extrémité (6) de ladite pièce moulée (2) sur laquelle ledit capuchon (4) est applicable, est plastiquement déformable ou déformée de cette manière au moyen dudit capuchon (4) appliqué, en ce qu'il forme avec ladite pièce moulée longiligne (1) traversée, une étanchéification et décharge de traction, ladite pièce moulée (2) présente, à son extrémité (6) recouverte par ledit capuchon (4), un collet (8) qui est dirigé vers l'intérieur en direction d'un axe central (7) dudit conduit de passage (3), et ledit collet (8) est formé tout autour.

2. Dispositif selon la revendication 1, **caractérisé en ce que** ladite pièce moulée (2) se compose de matériau polymère thermoplastique.

3. Dispositif selon la revendication 1 ou 2, **caractérisé en ce que** ladite pièce moulée (2) se compose de polycarbonate.

4. Dispositif selon l'une des revendications 1 à 3, **caractérisé en ce que** la pièce moulée (2) présente à son extrémité (6) une paroi plus mince que son parcours ultérieur, déformable plastiquement au moyen dudit capuchon (4).

5. Dispositif selon l'une des revendications 1 à 4, **caractérisé en ce que** ladite pièce moulée (2) présente, sur une partie de sa longueur commençant à une distance de son extrémité (6) recouvert par ledit capuchon (4), un filetage extérieur (9) et ledit capuchon (4) présente une zone d'enveloppe cylindrique (10) avec un filetage intérieur (11) correspondant.

6. Dispositif selon l'une des revendications 1 à 5, **caractérisé en ce que** ledit capuchon (4) présente des contours de déformation (12) entre ladite ouverture de passage (5) et une zone d'enveloppe cylindrique (10), qui, dans la position nominale de montage, reposent contre ladite extrémité (6) ou une zone d'extrémité de la pièce moulée (2).

7. Dispositif selon la revendication 6, **caractérisé en ce que** lesdits contours de déformation (12) sont formés de manière arquée, hémisphérique ou conique, en rétrécissant progressivement l'espace libre environnant d'une zone de pression vers ladite ouverture de passage (5) dudit capuchon (4).

8. Dispositif selon l'une des revendications 1 à 7, **caractérisé en ce qu'**un collet en matériau élastomère est moulé d'un seul tenant ou fixé sur le bord de ladite extrémité (6) recouvert par ledit capuchon (4) de ladite pièce moulée (2).

9. Dispositif selon l'une des revendications 1 à 8, **caractérisé en ce que** ledit capuchon (4) se compose de métal.

10. Dispositif selon l'une des revendications 1 à 9, **caractérisé en ce que** ledit capuchon (4) présente des surfaces de clé circonférentielles polygonales (13) pour la fixation d'une clé de serrage.

11. Dispositif selon l'une des revendications 1 à 10, **caractérisé en ce que** ladite pièce moulée (2) est conçue comme un mamelon double, dont une première extrémité porte ledit capuchon (4) et dont une deuxième extrémité (14) est montable à travers une ouverture ou une perforation dans une paroi d'un composant.

12. Dispositif selon la revendication 11, **caractérisé en ce qu'**un collet de support (15) est formé entre ladite première et ladite deuxième extrémité (14).

13. Dispositif selon la revendication 12, **caractérisé en ce qu'**une lèvre (16) est formée sur ladite deuxième extrémité (14) près dudit collier de support (15), ladite lèvre (16) est plastiquement déformable au moyen d'un composant monté sur ladite deuxième extrémité (14), en particulier un composant vissé sur un filetage extérieur de ladite deuxième extrémité.
